# EUROPEAN PATENT APPLICATION

(11) **EP 1 225 564 A2**
(43) Date of publication of application: **24.07.2002**
(21) Application number: 01310566.3
(22) Date of filing: 18.12.2001
(51) Int. Cl.: G10H 1/00, H04N 5/00

(54) **Server, terminal, information processing system, and information record medium**

(30) Priority: 27.12.2000 JP 2000398904
(71) Applicant: Pioneer Corporation, Meguro-ku, Tokyo (JP)
(72) Inventor: Hayashi, Kazuhiro, Pioneer Corporation, Tokorozawa-shi, Saitama (JP); Takahashi, Takeshi, Pioneer Corporation, Tokorozawa-shi, Saitama (JP)
(74) Representative: Haley, Stephen

(57) **Abstract**

A server 1 comprises a main storage section 5a for storing a plurality of pieces of music, a substorage section 5b for storing number-of-output-times information pieces each indicating the number of times the corresponding piece of music has been output to the terminal 10 and a CPU 4 for outputting each piece of music to be output to the terminal 10 together with the number-of-output-times information piece and based on the returned number-of-output-times information piece, the CPU 4 for prohibiting the piece of music whose number of output times to the terminal 10 becomes a threshold value or more from being output to the terminal 10 in the later output after the output to the terminal 10 wherein the number of times the piece of music has been output to the terminal becomes equal to the threshold value.

## Description

This invention relates to technical fields of a server, a terminal, an information processing system, and an information record medium and more particularly to technical fields of a server for storing a plurality of pieces of information and outputting the information pieces to a terminal for making the most use of the information pieces, a terminal for making the most use of the information output from the server, an information processing system containing the server and the terminal, and an information record medium recorded a control program for the server or the terminal in a readable form in the server or the terminal.

In recent years, an audio system has been developed wherein an audio apparatus installed at home is made to function as a server for storing a large number of pieces of music and the user copies a plurality of pieces of music from the audio apparatus into a portable, small-sized terminal for storage and plays back any piece of music away from home, etc., thereby listening to the piece of music.

At this time, in the audio system according to the related art, from the demand for securing a copyright, a piece of music is only copied into the terminal from the audio apparatus and the copied piece of music is not restored to the audio apparatus from the terminal.

In the described audio system according to the related art, information as to what pieces of music the user copied into the terminal for listening them in the past, as to which pieces of music the user has copied frequently (namely, the user has listened frequently with the terminal as favorite pieces of music), etc., is not utilized to select a piece of music.

Further, information for centralizing control of the whole of pieces of music stored in the audio apparatus is also not used.

Then, to eliminate such problems, it is considered to attach the taste for each piece of music to the piece of music as a parameter and copy the pieces of music into a terminal in the taste order from high to low.

However, if only the pieces of music high in taste are thus transferred simply to the terminal in the taste order from high to low, only the pieces of music high in taste, namely, having a large value as the number of times each piece of music has been transferred are transferred each time and consequently, the pieces of music that the user can listen to with the terminal become stereotyped and the convenience as an audio system is degraded; this is a problem.

It is therefore an object of the invention to provide a server for making it possible to prevent the types of pieces of music that the user can listen to with a terminal from becoming stereotyped to improve the convenience of the user when the user listens to the pieces of music, a terminal for conveniently making the most use of the information output from the server, an information processing system containing the server and the terminal, and an information record medium recording a control program for the server or the terminal in a readable form in the server or the terminal.

In order to accomplish the object, according to a first aspect of the invention, there is provided a server comprising:
a storage section, such as a main storage section or the like, for storing a plurality of first information pieces;
a corresponding information storage section, such as a substorage section or the like, for storing a plurality of second information pieces in one-to-one correspondence with the plurality of the first information pieces, the second information pieces indicating number of output times the first information pieces has been outputted to a terminal;
an output section, such as a CPU or the like, for outputting the first information pieces to be outputted to a terminal together with the second information pieces corresponding to the first information pieces to be outputted; and
a prohibition section, such as the CPU or the like,
wherein when the outputted second information piece is returned from the terminal, on a basis of the returned second information pieces, the prohibition section prohibits the first information pieces corresponding to the second information piece of which the number of output times becomes a preset threshold value or more from being outputted to the terminal in later output after the output to the terminal wherein the number of output times becomes equal to the threshold value.

Thus, the second information pieces provided in a one-to-one correspondence with the plurality of first information pieces are output to the terminal together with the first information pieces and further based on the second information returned from the terminal, the first information piece of which number of output times to the terminal becomes the threshold value or more is prohibited from being output to the terminal in the later output after the output to the terminal wherein the number of times the first information piece has been output to the terminal becomes equal to the threshold value, so that the user can be prevented from again and again making the most use of each the first information piece of which number of output times is large with the terminal, and the first information piece of which the most use is made in the terminal can be prevented from becoming stereotyped.

To accomplish the object, according to a second aspect of the invention, there is provided a server comprising:
a storage section, such as a main storage section or the like, for storing a plurality of first information pieces;
a corresponding information storage section, such as a substorage section or the like, for storing a plurality of second information pieces in one-to-one correspondence with the plurality of the first information pieces, the second information pieces indicating number of output times the first information pieces has been outputted to a terminal;
an output section, such as a CPU or the like, for outputting the first information pieces to be outputted to a terminal;
an increment section, such as the CPU or the like, for incrementing the number of output times of the second information piece corresponding to the first information piece outputted to the terminal each time when the first information piece is outputted to the terminal; and
a prohibition section, such as the CPU or the like, for prohibiting the first information pieces corresponding to the second information piece of which the number of output times becomes a preset threshold value or more from being outputted to the terminal in later output after the output to the terminal wherein the number of output times becomes equal to the threshold value.

Thus, each of the second information pieces provided in a one-to-one correspondence with the plurality of first information pieces is incremented each time the corresponding first information piece has been output to the terminal, and based on the post-incremented second information, the first information piece of which number of output times to the terminal becomes the threshold value or more is prohibited from being output to the terminal in the later output after the output to the terminal wherein the number of times the first information piece has been output to the terminal becomes equal to the threshold value, so that the user can be prevented from again and again making the most use of each the first information piece of which number of output times is large with the terminal, and the first information pieces of which the most use is made in the terminal can be prevented from becoming stereotyped.

To accomplish the object, according to a third aspect of the invention, there is provided the server according to any one of the first and second aspects of the invention, further comprising a initialization section for initializing the second information piece corresponding to the first information piece prohibited from being output to the terminal.

Thus, even the first information piece once prohibited from being output can be restored to a first information piece to be again output to the terminal and thus the user can again make the most use of the first information piece with the terminal.

To accomplish the object, according to a fourth aspect of the invention, there is provided the server according to any one of the first to third aspects of the invention, wherein the first information pieces are a plurality of pieces of music.

Thus, the pieces of music that the user can listen to with the terminal can be prevented from becoming stereotyped.

To accomplish the object, according to a fifth aspect of the invention, there is provided a terminal comprising:
a storage section, such as a main storage section or the like, for storing a plurality of first information pieces;
an acquisition section, such as a CUP or the like, for acquiring a plurality of second information pieces in one-to-one correspondence with the plurality of the first information pieces together with the first information pieces corresponding to the second information pieces, the second information pieces indicating number of output times the first information pieces has been outputted to a terminal;
an increment section, such as the CPU or the like, for incrementing the second information pieces corresponding to the acquired first information pieces;
a utilization section for utilizing the acquired first information pieces; and
a return section, such as the CPU or the like, for returning the incremented second information pieces to the server.

Since the second information piece output together with the corresponding the first information piece is incremented and then returned to the server, based on the second information returned to the server, the first information piece of which number of output times to the terminal becomes the threshold value or more is prohibited from being output to the terminal in the later output after the output to the terminal wherein the number of times the first information piece has been output to the terminal becomes equal to the threshold value, so that the user can be prevented from again and again making the most use of each the first information piece of which number of output times is large with the terminal, and the first information pieces of which the most use is made in the terminal can be prevented from becoming stereotyped.

To accomplish the object, according to a sixth aspect of the invention, there is provided the terminal according to the fifth aspect of the invention, wherein the plurality of first information pieces are a plurality of pieces of music.

Thus, the pieces of music that the user can listen to with the terminal can be prevented from becoming stereotyped.

To accomplish the object, according to a seventh aspect of the invention, there is provided an information processing system comprising:
a server; and
a terminal connected to the server via a network,
wherein
the server comprises:
   a first storage section for storing a plurality of first information pieces;
   a corresponding information storage section for storing a plurality of second information pieces in one-to-one correspondence with the plurality of the first information pieces, the second information pieces indicating number of output times the first information pieces has been outputted to a terminal;
   an output section for outputting the first information pieces to be outputted to a terminal together with the second information pieces corresponding to the first information pieces to be outputted; and
   a prohibition section,
the terminal comprises:
   a second storage section for storing the plurality of first information pieces;
   an acquisition section for acquiring the plurality of second information pieces together with the first information pieces corresponding to the second information pieces;
   an increment section for incrementing the second information pieces corresponding to the acquired first information pieces;
   a utilization section for utilizing the acquired first information pieces; and
   a return section for returning the incremented second information pieces to the server, and
wherein when the outputted second information piece is returned from the terminal, on a basis of the returned second information pieces, the prohibition section of the server prohibits the first information pieces corresponding to the second information piece of which the number of output times becomes a preset threshold value or more from being outputted to the terminal in later output after the output to the terminal wherein the number of output times becomes equal to the threshold value.

According to an eighth aspect of the invention, there is provided an information processing system comprising:
a server; and
a terminal connected to the server via a network,
wherein the server comprises:
   a first storage section for storing a plurality of first information pieces;
   a corresponding information storage section for storing a plurality of second information pieces in one-to-one correspondence with the plurality of the first information pieces, the second information pieces indicating number of output times the first information pieces has been outputted to a terminal;
   an output section for outputting the first information pieces to be outputted to a terminal;
   an increment section for incrementing the number of output times of the second information piece corresponding to the first information piece outputted to the terminal each time when the first information piece is outputted to the terminal; and
a prohibition section for prohibiting the first information pieces corresponding to the second information piece of which the number of output times becomes a preset threshold value or more from being outputted to the terminal in later output after the output to the terminal wherein the number of output times becomes equal to the threshold value, and
the terminal comprises:
   a second storage section for storing the plurality of first information pieces;
   an acquisition section for acquiring the plurality of second information pieces together with the first information pieces corresponding to the second information pieces;
   an increment section for incrementing the second information pieces corresponding to the acquired first information pieces;
   a utilization section for utilizing the acquired first information pieces; and
   a return section for returning the incremented second information pieces to the server.

Thus, based on the second information piece for each first information piece, the first information piece of which number of output times to the terminal becomes the threshold value or more is prohibited from being output to the terminal in the later output after the output to the terminal wherein the number of times the first information piece has been output to the terminal becomes equal to the threshold value, so that the user can be prevented from again and again making the most use of each the first information piece of which number of output times is large with the terminal, and the first information pieces of which the most use is made in the terminal can be prevented from becoming stereotyped.

To accomplish the object, according to a ninth aspect of the invention, there is provided an information record medium recording a sever program for causing a server computer contained in a server to function as:
a storage section for storing a plurality of first information pieces;
a corresponding information storage section for storing a plurality of second information pieces in one-to-one correspondence with the plurality of the first information pieces, the second information pieces indicating number of output times the first information pieces has been outputted to a terminal;
an output section for outputting the first information pieces to be outputted to a terminal together with the second information pieces corresponding to the first information pieces to be outputted; and
a prohibition section,
wherein when the outputted second information piece is returned from the terminal, on a basis of the returned second information pieces, the prohibition section prohibits the first information pieces corresponding to the second information piece of which the number of output times becomes a preset threshold value or more from being outputted to the terminal in later output after the output to the terminal wherein the number of output times becomes equal to the threshold value.

Thus, the server computer is caused to function so that the second information pieces provided in a one-to-one correspondence with the plurality of first information pieces are output to the terminal together with the first information pieces and further, based on the second information returned from the terminal, the first information piece of which number of output times to the terminal becomes the threshold value or more is prohibited from being output to the terminal in the later output after the output to the terminal wherein the number of times the first information piece has been output to the terminal becomes equal to the threshold value. Thus, the user can be prevented from again and again making the most use of each the first information piece of which number of output times is large with the terminal, and the first information pieces of which the most use is made in the terminal can be prevented from becoming stereotyped.

To accomplish the object, according to a tenth aspect of the invention, there is provided an information record medium recording a sever program for causing a server computer contained in a server to function as:
a storage section for storing a plurality of first information pieces;
a corresponding information storage section for storing a plurality of second information pieces in one-to-one correspondence with the plurality of the first information pieces, the second information pieces indicating number of output times the first information pieces has been outputted to a terminal;
an output section for outputting the first information pieces to be outputted to a terminal;
an increment section for incrementing the number of output times of the second information piece corresponding to the first information piece outputted to the terminal each time when the first information piece is outputted to the terminal; and
a prohibition section for prohibiting the first information pieces corresponding to the second information piece of which the number of output times becomes a preset threshold value or more from being outputted to the terminal in later output after the output to the terminal wherein the number of output times becomes equal to the threshold value.

Thus, the server computer is caused to function so that each of the second information pieces provided in a one-to-one correspondence with the plurality of first information pieces is incremented each time the corresponding the first information piece has been output to the terminal, and based on the post-incremented second information, the first information piece of which number of output times to the terminal becomes the threshold value or more is prohibited from being output to the terminal in the later output after the output to the terminal wherein the number of times the first information piece has been output to the terminal becomes equal to the threshold value. Thus, the user can be prevented from again and again making the most use of each the first information piece whose number of output times is large with the terminal, and the first information pieces of which the most use is made in the terminal can be prevented from becoming stereotyped.

To accomplish the object, according to an eleventh aspect of the invention, there is provided an information record medium recording a terminal program for causing a terminal computer contained in a terminal to function as:
a storage section for storing a plurality of first information pieces;
an acquisition section for acquiring a plurality of second information pieces in one-to-one correspondence with the plurality of the first information pieces together with the first information pieces corresponding to the second information pieces, the second information pieces indicating number of output times the first information pieces has been outputted to a terminal;
an increment section for incrementing the second information pieces corresponding to the acquired first information pieces;
a utilization section for utilizing the acquired first information pieces; and
a return section for returning the incremented second information pieces to the server.

Thus, the terminal computer is caused to function so that the second information piece output together with the corresponding the first information piece is incremented and then returned to the server. Thus, based on the second information returned to the server, the first information piece whose number of output times to the terminal becomes the threshold value or more is prohibited from being output to the terminal in the later output after the output to the terminal wherein the number of times the first information piece has been output to the terminal becomes equal to the threshold value, so that the user can be prevented from again and again making the most use of each the first information piece of which number of output times is large with the terminal, and the first information pieces of which the most use is made in the terminal can be prevented from becoming stereotyped.

### IN THE DRAWINGS:

FIG. 1 is a block diagram to show the general configuration of an audio system of an embodiment.

FIG. 2 is a drawing to show the contents of correspondence information and batch information in the embodiment. FIG. 2 (a) is a drawing to show the contents of the correspondence information and FIG. 2 (b) is a drawing to show the contents of the batch information.

FIG. 3 is a schematic drawing (I) to show handling of the correspondence information and the batch information according to the embodiment.

FIG. 4 is a schematic drawing (II) to show handling of the correspondence information and the batch information according to the embodiment.

FIG. 5 is a flowchart to show program processing of embodiment.

FIG. 6 is a schematic drawing to show transferred music selection processing of embodiment.

Referring now to the accompanying drawings, preferred embodiments of the invention will be described.

The embodiments described below are embodiments of the invention applied to music transfer processing in an audio system containing a server capable of storing a large number of pieces of music and transferring a piece of music desired by the user among the stored pieces of music to a terminal for copy and a portable terminal capable of storing pieces of music transferred from the server and playing back and outputting the stored pieces of music as the user operates the terminal.

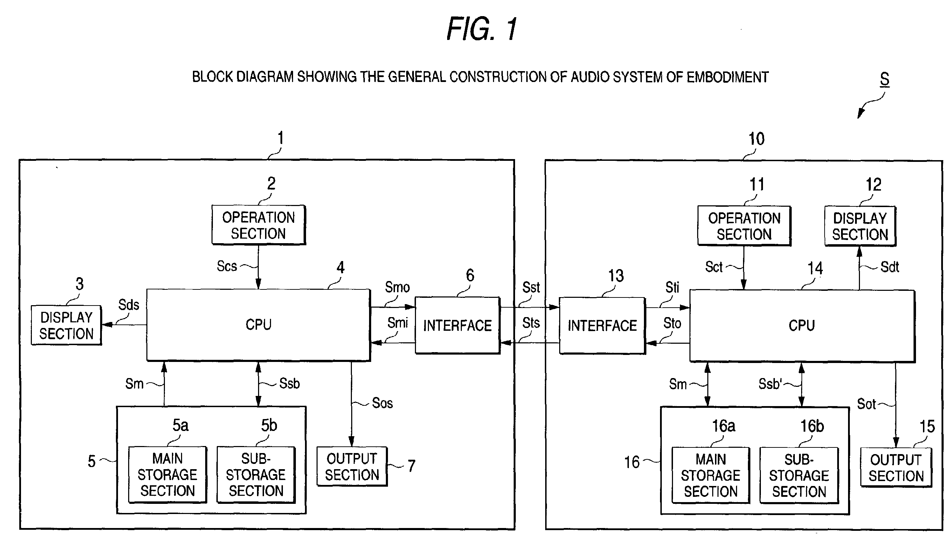

To begin with, the general configuration and the basic operation of an audio system according to an embodiment of the invention will be discussed with reference to FIGS. 1 to 4.

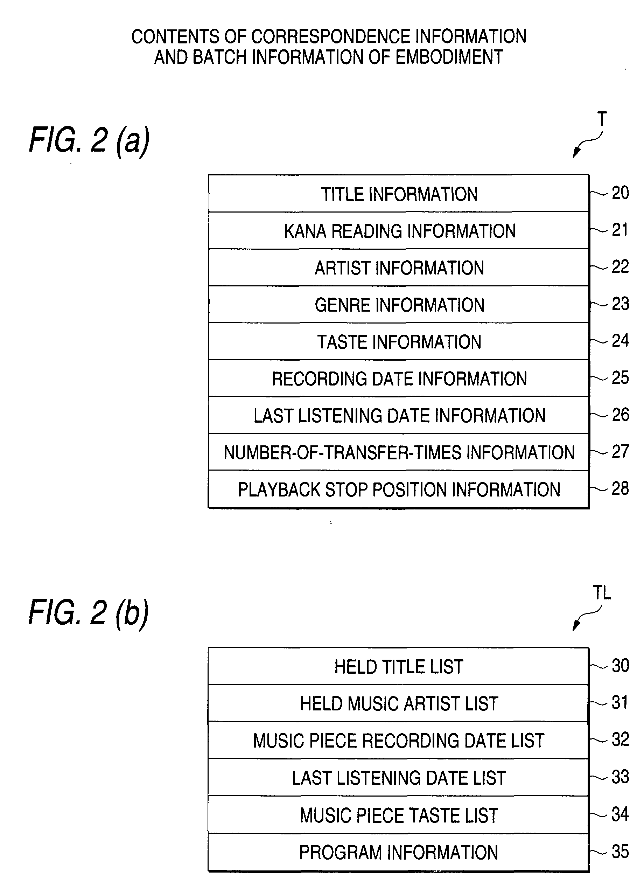

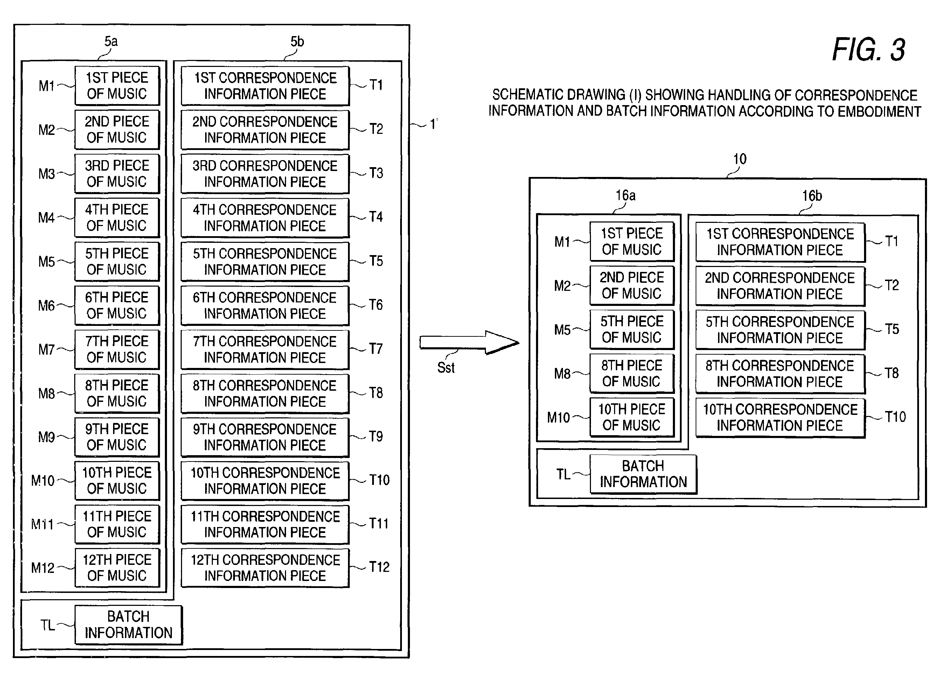

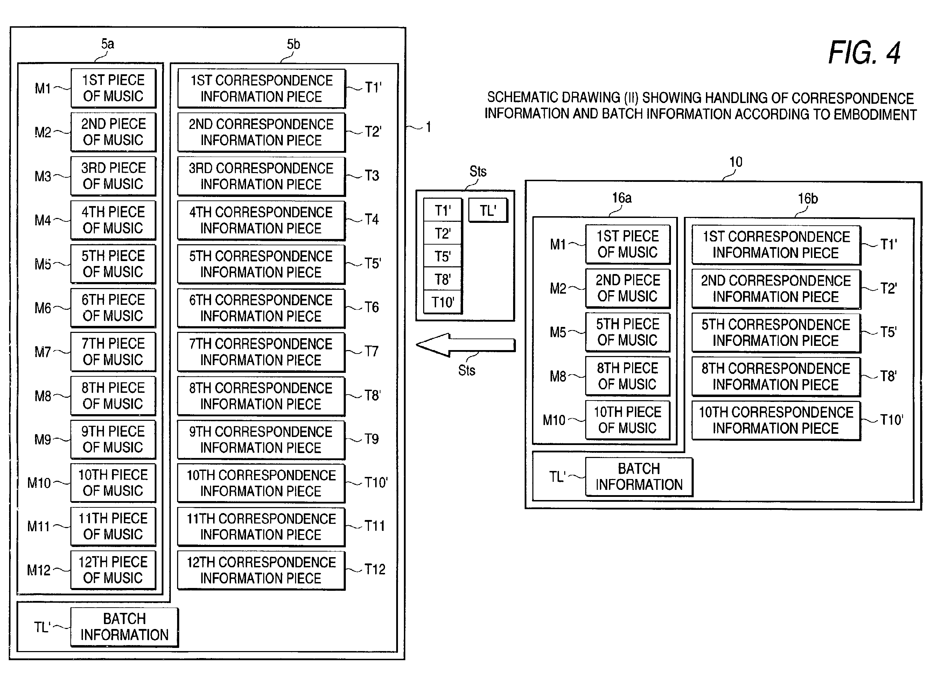

FIG. 1 is a block diagram to show the general configuration of the audio system, FIG. 2 is a drawing to show the contents of correspondence information and batch information described later (the correspondence information and the batch information will be hereinafter referred to collectively as correspondence information, etc., whenever necessary), and FIGS. 3 and 4 are schematic drawings to schematically describe handling of the correspondence information, etc., according to the embodiment.

As shown in FIG. 1, the audio system S according to the embodiment is made up of a server 1 for storing a large number of pieces of music and if the user selects any desired piece of music, transferring the selected piece of music and the correspondence information corresponding to the piece of music, etc., to a terminal 10 for copy and the portable terminal 10 capable of copying the piece of music transferred from the server 1 for storage and enabling the user to listen to the stored piece of music as required.

When the user completes listening to the piece of music transferred from the server 1, the terminal 10 also returns the correspondence information and the like updated based on a mode after the completion to the server 1 as the user operates the terminal 10.

Next, the detailed configurations and the operation of the server 1 and the terminal 10 will be discussed.

At First, the server 1 is made up of an operation section 2, a display section 3, a CPU 4 as an output unit, a prohibition unit, and an increment unit, an external storage section 5 comprising a main storage section 5a as a storage unit and a substorage section 5b as a correspondence information storage unit, an interface 6, and an output section 7.

On the other hand, the terminal 10 is made up of an operation section 11, a display section 12, an interface 13, a CPU 14 as a utilization unit, an acquisition unit, an increment unit, and a return unit, an output section 15, and an external storage section 16 comprising a main storage section 16a and a substorage section 16b.

Next, the basic operation of the audio system S will be discussed.

First, the basic operation of the server 1 will be discussed.

A large number of pieces of music M are stored in the main storage section 5a of the external storage section 5 in the server 1 so that the pieces of music M can be distinguished from each other, for example, as shown in the left portion of FIG. 3. In the left portion of FIG. 3, a first piece of music M1 to a twelfth piece of music M12 are stored in the main storage section 5a. Each piece of music M is output to the CPU 4 as a music signal Sm under the control of the CPU 4.

Next, correspondence information pieces T each indicating the contents and attribute of the corresponding piece of music are stored in the substorage section 5b of the external storage section 5 in the server 1 in a one-to-one correspondence with the pieces of music M stored in the main storage section 5a so that the correspondence information pieces T can be distinguished from each other, for example, as shown in the left portion of FIG. 3. In the left portion of FIG. 3, a first correspondence information piece T1 to a twelfth correspondence information piece T12 are stored in the substorage section 5b in a one-to-one correspondence with the first piece of music M1 to the twelfth piece of music M12.

Here, information contained in one correspondence information piece T stored so as to correspond to one piece of music M will be discussed with reference to FIG. 2 (a).

As shown in FIG. 2 (a), one correspondence information piece T contains information indicating the contents and attribute of the piece of music M to which the correspondence information piece T corresponds; specifically the correspondence information piece T contains title information 20 indicating a title of the piece of music M, kana reading information 21 indicating the kana reading of the title, artist information 22 indicating a player or singer playing or singing the piece of music, genre information 23 indicating the music genre (category) to which the piece of music belongs, taste information 24 indicating the taste for the piece of music (namely, the taste indicating how much frequently the user has listened to the piece of music), recording date information 25 indicating the date on which the piece of music was stored in the main storage section 5a, last listening date information 26 indicating the date on which the user last listened to the piece of music in the terminal 10, number-of-transfer-times information 27 indicating the number of times the piece of music has been transferred from the server 1 to the terminal 10, and playback stop position information 28 indicating a position at which playback was stopped when the user last listened to the piece of music (specifically, when playback was stopped at a midpoint of the piece of music, time information of the stop position from the beginning of the piece of music).

Next, batch information TL collectively indicating the pieces of music M so as to correspond to the whole of the pieces of music M stored in the main storage section 5a is stored in the substorage section 5b, for example, as shown in the left portion of FIG. 3.

Here, information contained in the batch information TL stored to correspond to the whole of the pieces of music M will be discussed with reference to FIG. 2 (b).

As shown in FIG. 2 (b), the batch information TL contains in batch the information indicating the contents and attributes of all pieces of music M stored in the main storage section 5a; specifically the batch information TL contains a held title list 30 describing the titles of all pieces of music M in a list form, a held music artist list 31 describing the players or the singers playing or singing the pieces of music M in a list form, a music piece recording date list 32 describing the storage date of each of pieces of music M in the main storage section 5a in a list form, a last listening date list 33 describing the last listening date to each of pieces of music M in the terminal 10 in a list form, a music piece taste list 34 describing the taste for each of pieces of music M in a list form, and program information 35 indicating the piece of music M preselected so as to be next transferred to the terminal 10.

The correspondence information T and the batch information TL containing the described contents are output to the CPU 4 as a correspondence information signal Ssb under the control of the CPU 4 and as described later, when the correspondence information T and the batch information TL are updated in the terminal 10 and returned therefrom, the returned correspondence information T and batch information TL are output from the CPU 4 as a correspondence information signal Ssb and replace the former correspondence information T and batch information TL in the substorage section 5b for storage.

On the other hand, if the user carrying the terminal 10 operates the operation section 2 to select a piece of music M to listen to in the terminal 10, the operation section 2 generates an operation signal Scs indicating the piece of music M and outputs the signal to the CPU 4.

In addition, if the user operates the operation section 2 to select a piece of music M to listen to in the server 1, the operation section 2 also generates an operation signal Scs indicating the piece of music M and outputs the signal to the CPU 4.

Thus, when the user listens to the piece of music M in the server 1, based on the operation signal Scs from the operation section 2, the CPU 4 reads the piece of music M for the user to listen to from the main storage section 5a as a music signal Sm and outputs the signal to the output section 7 as an output signal Sos.

The output section 7 outputs the piece of music M contained in the output signal Sos to the user. To output the piece of music M, specifically, for example, the output section 7 may be directly output through a loudspeaker (not shown) or when headphones, an earphone, or the like is connected to the output section 7, the piece of music M may be output to the headphones, etc.

Concurrently, when the user listens to the piece of music M in the server 1, the CPU 4 reads the correspondence information T corresponding to the piece of music M and the batch information TL from the substorage section 5b as a correspondence information signal Ssb and increments the taste information of the piece of music M contained in the correspondence information T and the batch information TL and further updates the last listening date information and the playback stop position information and then returns the updated information to the substorage section 5b as a correspondence information signal Ssb for storage in the substorage section 5b in place of the former correspondence information T and the former batch information TL.

On the other hand, in case of transferring the piece of music M to the terminal 10 based on the operation signal Scs from the operation section 2, the CPU 4 reads the piece of music M for the user to listen to from the main storage section 5a as a music signal Sm and also reads the correspondence information T corresponding to the read piece of music M and the batch information TL from the substorage section 5b as a correspondence information signal Ssb and outputs the signals to the interface 6 collectively as an external output signal Smo.

Accordingly, the interface 6 performs preset output interface processing for the external output signal Smo and outputs the signal to the terminal 10 as a server output signal Sst.

At this time, to start outputting the server output signal SScto the terminal 10, for example, a transfer start button placed on the terminal 10, the server 1, or a connection cable connecting the terminal 10 and the server 1 may be operated or when the fact that the terminal 10 and the server 1 are connected by the connection cable is detected, immediately outputting the server output signal Sst may be started. The fact that the terminal 10 approaches a point in a preset distance range from the server 1 is detected and outputting the server output signal Sst may also be started, for example, by a radio communication system at the detection timing.

On the other hand, as described later, when the correspondence information T and the batch information TL whose contents are updated are returned as a terminal output signal Sts from the terminal 10, the interface 6 performs preset input interface processing for the terminal output signal Sts and outputs the signal to the CPU 4 as an external input signal Smi.

Accordingly, the CPU 4 outputs the correspondence information T and the batch information TL whose contents are updated, contained in the external input signal Smi to the substorage section 5b as a correspondence information signal Ssb for storage in the substorage section 5b in place of the former correspondence information T and the former batch information TL.

To perform the above-described processing, when information to be displayed on the display section 3 exists, the CPU 4 generates a display signal Sds containing the information to be displayed and outputs the display signal Sds to the display section 3. Upon reception of the display signal Sds, the display section 3 displays the necessary information.

Next, the basic operation of the terminal 10 will be discussed.

First, when the server output signal Sst containing the piece of music M that the user wants to listen to, the correspondence information T corresponding to the piece of music M, and the batch information TL is input to the terminal 10 from the server 1, the interface 13 performs preset input interface processing for the server output signal Sst and outputs the processed signal to the CPU 14 as an external input signal Sti.

The CPU 14 separates the external input signal Sti into the piece of music M and the correspondence information T and the batch information TL and stores the piece of music M in the main storage section 16a of the external storage section 16 as a music signal Sm so that the piece of music M can be distinguished from other pieces of music, and stores the correspondence information T and the batch information TL in the substorage section 16b of the external storage section 16 as a correspondence information signal Ssb so that the correspondence information T and the batch information TL can be distinguished from other pieces of information.

An example of a mode in which the piece of music M and the correspondence information T and the batch information TL are stored will be discussed with reference to the right portion of FIG. 3. In the right portion of FIG. 3, the first piece of music M1, the second piece of music M2, the fifth piece of music M5, the eighth piece of music M8, and the tenth piece of music M10 selected (by the user to listen to them in the terminal 10) in the server 1 and transferred therefrom are stored in the main storage section 16a. Each piece of music M is output to the CPU 14 as a music signal Sm under the control of the CPU 14.

On the other hand, in the right portion of FIG. 3, the first correspondence information piece T1, the second correspondence information piece T2, the fifth correspondence information piece T5, the eighth correspondence information piece T8, and the tenth correspondence information piece T10 transferred from the server 1 are stored in the substorage section 16b in a one-to-one correspondence with the first piece of music M1, the second piece of music M2, the fifth piece of music M5, the eighth piece of music M8, and the tenth piece of music M10, and further the batch information TL is also stored with the correspondence information pieces in the substorage section 16b. Each correspondence information piece T and the batch information TL are output to the CPU 14 as a correspondence information signal Ssb under the control of the CPU 14.

Next, when the user operates the operation section 11 to select one piece of music M to listen to from among the pieces of music M stored in the main storage section 16a, the operation section 11 generates an operation signal Sct indicating the selected piece of music M and outputs the generated signal to the CPU 14.

Thus, based on the operation signal Sct from the operation section 11, the CPU 14 reads the piece of music M for the user to listen to from the main storage section 16a as a music signal Sm and outputs the read signal to the output section 15 as an output signal Sot.

The output section 15 outputs the piece of music M contained in the output signal Sot to the user. To output the piece of music M, specifically, for example, the piece of music M may be directly output through a loudspeaker (not shown) or when headphones, an earphone, or the like is connected to the output section 15, the piece of music M may be output to the headphones, etc., as with the output section 7 described above.

Concurrently, the CPU 14 reads the correspondence information T corresponding to the piece of music M for the user to listen to and the batch information TL from the substorage section 16b as a correspondence information signal Ssb and increments the taste information of the piece of music M contained in the correspondence information T and the batch information TL and further updates the last listening date information and the playback stop position information, and then returns the updated information to the substorage section 16b as a correspondence information signal Ssb for storage in the substorage section 16b in place of the former correspondence information T and the former batch information TL.

When the user terminates listing to the piece of music M with the terminal 10, based on the operation signal Sct from the operation section 11, the CPU 14 reads the correspondence information T and the batch information TL whose contents are updated from the substorage section 16b as a correspondence information signal Ssb and outputs them to the interface 13 collectively as an external output signal Sto.

Accordingly, the interface 13 performs preset output interface processing for the external output signal Sto and outputs the processed signal to the server 1 as a terminal output signal Sts.

At this time, outputting the terminal output signal Sts to the server 1 may also be started, for example, when the terminal 10 recognizes the necessity for outputting the terminal output signal Sts to the server 1 (more particularly, for example, the terminal 10 recognizes that the correspondence information T or the batch information TL is updated) after the transfer path between the server 1 and the terminal 10 is established.

The server 1 outputs the correspondence information T and the batch information TL returned as the terminal output signal Sts to the substorage section 5b through the interface 6 and the CPU 4 for storage in the substorage section 5b in place of the former correspondence information T and the former batch information TL, as described above.

To perform each above-described processing, when information to be displayed on the display section 12 exists, the CPU 14 generates a display signal Sdt containing the information to be displayed and outputs the display signal Sdt to the display section 12. Upon reception of the display signal Sdt, the display section 12 displays the necessary information.

Next, an example of handling the correspondence information T and the batch information TL described above will be discussed in detail with reference to FIGS. 3 and 4.

First, as shown in FIG. 3, when the user operates the operation section 2 to enter a command for transferring the first piece of music M1, the second piece of music M2, the fifth piece of music M5, the eighth piece of music M8, and the tenth piece of music M10 among the pieces of music M stored in the main storage section 5a in the server 1 to the terminal 10, the CPU 4 reads the first piece of music M1, the second piece of music M2, the fifth piece of music M5, the eighth piece of music M8, and the tenth piece of music M10 from the main storage section 5a as music signals Sm, reads the first correspondence information piece T1, the second correspondence information piece T2, the fifth correspondence information piece T5, the eighth correspondence information piece T8, and the tenth correspondence information piece T10 corresponding to the first piece of music M1, the second piece of music M2, the fifth piece of music M5, the eighth piece of music M8, and the tenth piece of music M10 and the batch information TL from the substorage section 5b as correspondence information signals Ssb, generates a server output signal Sst containing them, and outputs the signal to the terminal 10. At this time, the number-of-transfer-times information 27 contained in each of the transferred correspondence information pieces T is incremented by one.

When the terminal 10 receives the server output signal SScthe CPU 14 stores the first piece of music M1, the second piece of music M2, the fifth piece of music M5, the eighth piece of music M8, and the tenth piece of music M10 contained in the server output signal Sst in the main storage section 16a as music signals Sm and stores the first correspondence information piece T1, the second correspondence information piece T2, the fifth correspondence information piece T5, the eighth correspondence information piece T8, and the tenth correspondence information piece T10 corresponding to the pieces of music M and the batch information TL in the substorage section 16b as correspondence information signals Ssb.

One transfer of the pieces of music M, etc., from the server 1 to the terminal 10 is now complete. In this state, the transferred pieces of music M, etc., are stored in the external storage section 16, as shown in the right portion of FIG. 3.

Next, the user starts to select and listen to one of the stored pieces of music M in the terminal 10. At this time, whenever one listening is complete, the last listening date information 26, the taste information 24, and the playback stop position information 28 in the corresponding information piece T corresponding to the piece of music M that the user listened to are updated in accordance with a mode of listening. More specifically, when the user listened to the same piece of music M again and again on the same day, the last listening date information 26 of the piece of music M is not updated; on the other hand, the taste information 24 is updated each time the user listens to the piece of music M, and further the playback stop position information 28 is updated for each listening so as to indicate the playback stop position (in other words, listening end position) in each listening.

Concurrently, corresponding parts of the last listening date list 33 and the music piece taste list 34 in the batch information TL are also updated.

Next, letting the corresponding information pieces T and the batch information TL after being updated be the first correspondence information piece T1', the second correspondence information piece T2', the fifth correspondence information piece T5', the eighth correspondence information piece T8', and the tenth correspondence information piece T10', and the batch information TL', the first correspondence information piece T1', etc., and the batch information TL' are stored in the external storage section 16 together with the first piece of music M, etc., as shown in the right portion of FIG. 4, upon completion of listening to all pieces of music M in the terminal 10.

When the user operates the operation section 11 to complete listening to the pieces of music M stored at present in the terminal 10 and the terminal 10 and the server 1 are again connected, the CPU 14 combines the first correspondence information piece T1', the second correspondence information piece T2', the fifth correspondence information piece T5', the eighth correspondence information piece T8', and the tenth correspondence information piece T10', and the batch information TL' into a terminal output signal Sts and outputs the signal to the server 1. At this time, the first piece of music M1, etc., stored in the terminal 10 is not transferred in view of the demand for securing the copyright.

Then, upon reception of the terminal output signal Sts, the server 1 outputs the first correspondence information piece T1', etc., and the batch information TL' contained in the signal to the substorage section 5b of the external storage section 5 as a correspondence information signal Ssb to store the new transferred information, namely, the first correspondence information piece T1', the second correspondence information piece T2', the fifth correspondence information piece T5' , the eighth correspondence information piece T8', and the tenth correspondence information piece T10', and the batch information TL' in the substorage section 5b in place of the former information, namely, the first correspondence information piece T1, the second correspondence information piece T2, the fifth correspondence information piece T5, the eighth correspondence information piece T8, and the tenth correspondence information piece T10, and the batch information TL.

Accordingly, the contents of each correspondence information piece T and the batch information TL stored in the substorage section 5b are updated in response to the mode in which the user listens to the music in the terminal 10.

After this, based on the updated contents, the piece of music M to be next transferred to the terminal 10 is selected by the user or the piece of music M for the user to listen to in the server 1 itself is selected.

More specifically, for example, to select one of the pieces of music M in the server 1 or the terminal 10 to which a new piece of music M is transferred, display may be produced on the display section 3 or 12 so as to select pieces of music M in order starting at the piece of music M high in taste (namely, the piece of music M for the user to frequently listen to in the server 1 or the terminal 10) based on the contents of the taste information 24 in the updated correspondence information T, or when the user listens to a piece of music M in the server 1 or the terminal 10 to which a new piece of music M is transferred, a current listening in the server 1 or the terminal 10 may be started at a position immediately following a previous listening end position based on the playback stop position information 28 in the correspondence information T corresponding to the piece of music M.

To select one of the pieces of music M in the server 1 or the terminal 10 to which a new piece of music M is transferred, display may be produced on the display section 3 or 12 so as to select pieces of music M in order from the piece of music M whose last listening date is the most recent to the piece of music M whose last listening date is the oldest based on the last listening date information 26 in the correspondence information T corresponding to each piece of M.

In transferring the correspondence information T and the batch information TL in the embodiment, the case where the whole of the correspondence information T and the whole of the batch information TL shown in FIG. 2 are transferred each time has been described; in addition, only updated parts of the correspondence information T and the batch information TL in the terminal 10 may be returned to the server 1. In this case, the information amount required for transmitting the correspondence information T and the batch information TL can be decreased.

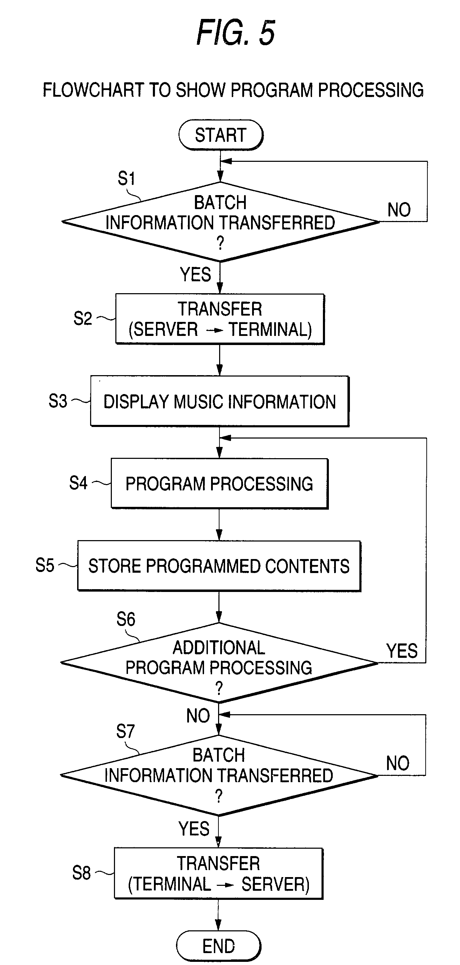

Next, an embodiment of program processing particularly using the batch information TL successively updated as described above will be discussed with reference to FIG. 5.

FIG. 5 is a flowchart to show the program processing.

The titles, etc., of all pieces of music stored in the server 1 are described in the batch information TL as lists, as described above, and thus the audio system S of the embodiment enables the user to program the terminal 10 to transfer a piece of music M from the server 1 to the terminal 10 next time by using the batch information TL as lists.

That is, as the program processing, as shown in FIG. 5, first whether or not transfer of the batch information TL together with transfer of a piece of music M from the server 1 to the terminal 10 is started is checked (step S1). If transfer is not executed (NO at step S1), a wait is made as it is; on the other hand, if transfer is executed (YES at step S1), then the batch information TL is transferred together with the piece of music M (step S2).

Next, while the user listens to the transferred piece of music M with the terminal 10, the last listening date list 33 and the music piece taste list 34 contained in the transferred batch information TL are also updated in response to the mode in which the user listens to the piece of music M. At this time, if the user operates the operation section 11 to program the terminal 10 to transfer the piece of music M thereto next time, the CPU 14 displays the titles, the artist names, and the recording dates of the pieces of music M stored in the server 1 on the display section 12 based on the held title list 30, the held music artist list 31, and the music piece recording date list 32 in the batch information TL (step S3). In this case, they may be displayed in the taste order from high to low by using the taste information 24 updated as the user has listened to the pieces of music M so far.

When all titles are displayed and the user selects (preselects) the piece of music M to be next transferred to the terminal 10 (step S4), the contents are stored in memory, etc., (not shown) in the CPU 14, thereby executing program processing (step S5) and whether or not the user programs the terminal 10 to transfer an additional piece of music M thereto is checked by displaying a message requesting the user to respond with YES or NO, etc., on the display section 12 (step S6).

If it is determined at step S6 that the terminal 10 needs to be programmed to transfer an additional piece of music M thereto (YES at step S6), control returns to steps S4 to S6 and program processing is performed. On the other hand, if the program processing is complete (NO at step S6), the program information 35 in the batch information TL stored in the substorage section 5b is updated to the batch information TL' in response to the programmed contents.

Listening to the piece of music M with the terminal 10 is complete and whether or not the correspondence information T' and the batch information TL' described above are to be returned to the server 1 is checked (step S7). If returning the correspondence information T' and the batch information TL' is not instructed (NO at step S7), a wait is made until the return is instructed. On the other hand, if returning the correspondence information T' and the batch information TL' is instructed (YES at step S7), the correspondence information T' and the batch information TL' are returned to the server 1 (step S8) and the program processing sequence is terminated.

After this, in the server 1, when the piece of music M is transferred to the terminal 10 next time, the piece of music M to be transferred is selected in response to the programmed contents contained in the current program information 35 and is transferred.

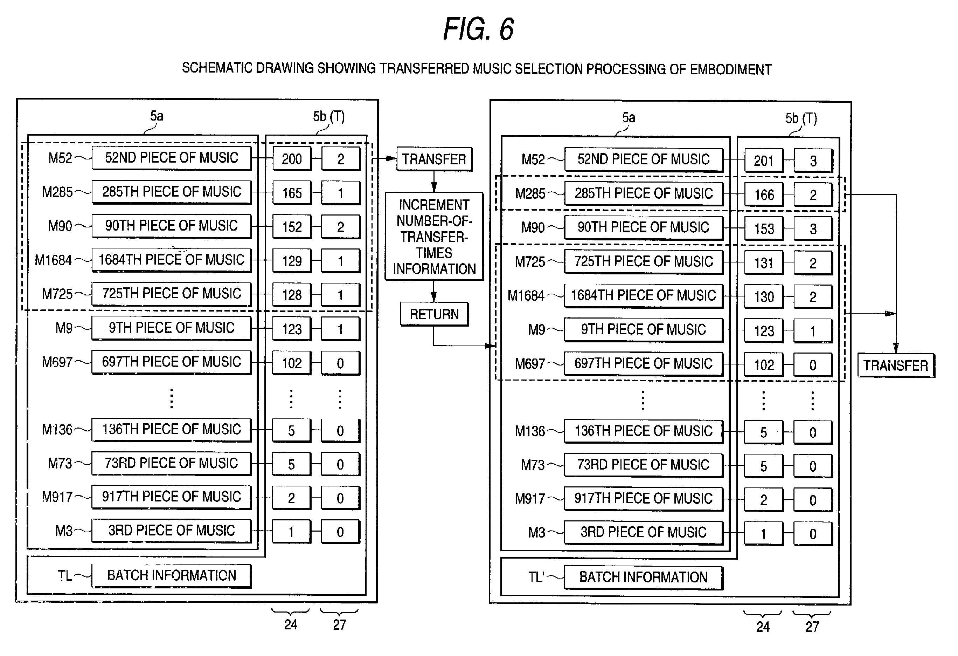

Next, an embodiment of transferred music selection processing particularly using the number-of-transfer-times information 27 in the correspondence information T successively updated as described above will be discussed with reference to FIG. 6.

FIG. 6 is a schematic drawing to show contents of the transferred music selection processing.

The number-of-transfer-times information 27 is provided corresponding to each piece of music M and is incremented by "one" each time the corresponding piece of music M is transferred from the server 1 to the terminal 10, as described above.

Then, in the audio system S of the embodiment, when the number-of-transfer-times information 27 reaches a value equal to or greater than a preset threshold value, the piece of music M corresponding to the number-of-transfer-times information 27 reaching the value is excluded from the pieces of music M to be transferred from the server 1 to the terminal 10.

That is, a more specific description is given with reference to FIG. 6. At first, in case of selecting the piece of music M to be transferred to the terminal 10 in the server 1, the pieces of music M are displayed on the display section 3 in the taste order from high to low based on the taste information 24 corresponding to each piece of music M as shown in the left portion of FIG. 6 and selection is executed. In the left portion of FIG. 6, transferring the five pieces having the highest taste is preset; specifically, the 52^{nd} piece of music M52, the 285^{th} piece of music M285, the 90^{th} piece of music M90, the 1684^{th} piece of music M1684, and the 725^{th} piece of music M725 in order starting at the 52^{nd} piece of music M52 of the highest taste (in other words, fitted most for the taste of the user) are selected as the pieces of music M to be transferred and are transferred together with the correspondence information T corresponding to the selected pieces of music M and the batch information TL.

At this time, upon completion of the transfer, the CPU 14 increments by one the number-of-transfer-times information 27 in each of the 52^{nd} correspondence information piece T52 corresponding to the 52^{nd} piece of music, the 285^{th} correspondence information piece T285 corresponding to the 285^{th} piece of music M285, the 90^{th} correspondence information piece T90 corresponding to the 90^{th} piece of music M90, the 1684^{th} correspondence information piece T1684 corresponding to the 1684^{th} piece of music M1684, and the 725^{th} correspondence information piece T725 corresponding to the 725^{th} piece of music M725 and then stores them in the substorage section 16b. The number-of-transfer-times information 27 may be incremented in the server 1 before the transfer is complete.

When the user completes listening to the pieces of music M with the terminal 10 and further the updated correspondence information T' and the updated batch information TL' are returned to the server 1, then, as shown in the right portion of FIG. 6, the taste information 24 in each of the 52^{nd} correspondence information piece T52, the 285^{th} correspondence information piece T285, the 90^{th} correspondence information piece T90, the 1684^{th} correspondence information piece T1684, and the 725^{th} correspondence information piece T725 is updated in response to the mode in which the user listens to the music in the terminal 10, and the number-of-transfer-times information 27 in each correspondence information piece T' is incremented by "one" in comparison with the value before transfer from the server 1 (in the left portion of FIG. 6) (in the right portion of FIG. 6, more specifically the number-of-transfer-times information in the 52^{nd} correspondence information piece T52 is incremented from "2" to "3", that in the 285^{th} correspondence information piece T285 is incremented from "1" to "2", that in the 90^{th} correspondence information piece T90 is incremented from "2" to "3", that in the 1684^{th} correspondence information piece T1684 is incremented from "1" to "2", and that in the 725^{th} correspondence information piece T725 is incremented from "1" to "2").

At this time, assuming that the threshold value relative to the number-of-transfer-times information 27 is "3", when pieces of music M are next transferred from the server 1, the pieces of music M corresponding to the number-of-transfer-times information 27 being "3" or greater are excluded from the transfer.

More particularly, in the selection of the pieces of music M to be transferred in the next transfer, the 52^{nd} piece of music and the 90^{th} piece of music M90 whose number-of-transfer-times information 27 reaches "3" are excluded from the transfer and other pieces of music M are shown as transfer candidates in order starting at the piece of music M having the highest value of the taste information 24; for example, the high-order five pieces of music (in the right portion of FIG. 6, the 285^{th} piece of music M285, the 725^{th} piece of music M725, the 1684^{th} piece of music M1684, and the 9^{th} piece of music M9, and the 697^{th} piece of music M697) are transferred to the terminal 10.

Each piece of music M whose number-of-transfer-times information 27 reaches the threshold value is not transferred at all later. In this case, the number-of-transfer-times information 27 is initialized to 0 by any of the methods described below and the corresponding piece of music M again becomes a transfer candidate.

That is, as a first initializing method of the number-of-transfer-times information 27, an initialization switch may be provided on the server 1 so that the user can operate the switch to initialize the number-of-transfer-times information 27.

As the second initializing method, number-of-nontransfer-times information indicating the number of times the piece of music M has not been transferred although transfer from the server 1 to the terminal 10 was executed is additionally provided for each piece of music M as a part of the correspondence information T and the number of times a transfer of any other piece of music M has been executed after the piece of music M with the number-of-transfer-times information 27 reaching the threshold value was excluded from the transfer is stored as the number-of-nontransfer-times information and when the value of the number-of-nontransfer-times information becomes another preset threshold value (for example, "2"), the number-of-transfer-times information 27 may be initialized.

As a third initializing method, when transfer of a piece of music M whose number-of-transfer-times information 27 reaches the threshold value (in FIG. 6, 3) is executed, a timer (not shown) in the CPU 4 is started and after the expiration of a preset time period (for example, one week) since the piece of music M was excluded from transfer, the number-of-transfer-times information 27 may be initialized. Counting the time period may be started at not only execution of the transfer of the piece of music M whose number-of-transfer-times information 27 reaches the threshold value, but also execution of the next transfer.

In the embodiment of the transferred music selection processing described above, the number-of-transfer-times information 27 is incremented upon completion of transferring to the terminal 10. In addition, when the server 1 has transferred (output) a piece of music M, the server 1 may increment the number-of-transfer-times information 27 and transfer the post-incremented number-of-transfer-times information 27 to the terminal 10.

In these cases, when the terminal 10 increments the number-of-transfer-times information 27, the number-of-transfer-times information 27 is incremented at a time when transfer of a piece of music M reliably terminates so that it is made possible to accurately indicate the actual number of transfer times by the number-of-transfer-times information 27; on the other hand, when the server 1 increments the number-of-transfer-times information 27, it is made possible to simplify the whole configuration of the audio system S and decrease the amount of the information to be transferred between the server 1 and the terminal 10.

To manage the number-of-transfer-times information 27 only in the server 1, the number-of-transfer-times information 27 may be untransferred to the terminal 10 and whenever a piece of music M is transferred from the server 1 to the terminal 10, the number-of-transfer-times information 27 corresponding to the transferred piece of music M may be incremented only in the server 1.

As described above, according to the operation of the audio system S of the embodiment, the number-of-transfer-times information 27 pieces provided in a one-to-one correspondence with the pieces of music M are transferred to the terminal 10 together with the pieces of music M and further, based on the number-of-transfer-times information 27 returned from the terminal 10, the piece of music M whose number of transfer times to the terminal 10 becomes "3" or more is prohibited from being output to the terminal 10 in the later transfer after the transfer to the terminal 10 wherein the number of times the piece of music M has been transferred to the terminal 10 becomes equal to "3", so that the user can be prevented from again and again listening to each piece of music M whose number of transfer times is large with the terminal 10, and the pieces of music M that the user listens to with the terminal 10 can be prevented from becoming stereotyped.

Even the piece of music M once prohibited from being transferred can be restored to a piece of music M to be again transferred to the terminal 10 and thus the user can again listen to the piece of music M with the terminal 10.

Further, when the server 1 increments the number-of-transfer-times information 27, it can be prevented that the most use of each piece of music M whose number of transfer times is large is used again and again in the terminal 10 and the pieces of music M that the user listens to with the terminal 10 can be prevented from becoming stereotyped.

In the described embodiments, the information pieces stored in the server 1 are a plurality of pieces of music M. However, in addition, for example, to store image information of a plurality of movies, etc., together with the correspondence information pieces each indicating the contents or the attributes of the corresponding movie and batch information collectively indicating them and transfer them to a portable terminal capable of playing back the image information for the user to play back the image information, the invention can also be applied.

Further, the transfer path of the music or image information need not necessarily be the above-described wired path at home; for example, the music or image information may be transferred to a remote location via network such as the Internet or may be transferred using a short-distance radio communication method following the so-called Bluetooth specifications, etc., having been standardized in recent years. Further, a mobile telephone may be connected to each of the server 1 and the terminal 10 so that the music or image information is transferred via a telephone line.

A program corresponding to the processing in the server 1 or the terminal 10 according to each embodiment described above is recorded on an information record medium such as a flexible disk or a hard disk and is read by general-purpose microcomputers installed in the server 1 and the terminal 10 for execution, whereby the microcomputers can also be made to function as the CPU 4 and the CPU 14.

As described above, according to a first aspect of the invention, the number-of-output-times information pieces provided in a one-to-one correspondence with the plurality of pieces of information are output to the terminal together with the pieces of information and further, based on the number-of-output-times information returned from the terminal, the piece of the information whose number of output times to the terminal becomes the threshold value or more is prohibited from being output to the terminal in the later output after the output to the terminal wherein the number of times the piece of the information has been output to the terminal becomes equal to the threshold value, so that the user can be prevented from again and again making the most use of each piece of the information whose number of output times is large with the terminal, and the pieces of the information of which the most use is made in the terminal can be prevented from becoming stereotyped.

Therefore, the pieces of the information of which the most use is made in the terminal can be prevented from becoming stereotyped and the convenience as the information processing system can be improved.

According to a second aspect of the invention, each of the number-of-output-times information pieces provided in a one-to-one correspondence with the plurality of pieces of information is incremented each time the corresponding piece of the information has been output to the terminal, and based on the post-incremented number-of-output-times information, the piece of the information whose number of output times to the terminal becomes the threshold value or more is prohibited from being output to the terminal in the later output after the output to the terminal wherein the number of times the piece of the information has been output to the terminal becomes equal to the threshold value, so that the user can be prevented from again and again making the most use of each piece of the information whose number of output times is large with the terminal, and the pieces of the information of which the most use is made in the terminal can be prevented from becoming stereotyped.

Therefore, the pieces of the information of which the most use is made in the terminal can be prevented from becoming stereotyped and the convenience as the information processing system can be improved.

According to a third aspect of the invention, in addition to the advantage of the first or second aspects of the invention, even the piece of information once prohibited from being output can be restored to a piece of information to be again output to the terminal and thus the user can again make the most use of the piece of information with the terminal.

According to a fourth aspect of the invention, in addition to the advantage of any one of the first to third aspects of the invention, each piece of the information is a piece of music and thus the pieces of music that the user can listen to with the terminal can be prevented from becoming stereotyped.

According to a fifth aspect of the invention, since the number-of-output-times information piece output together with the corresponding piece of the information is incremented and then returned to the server, based on the number-of-output-times information returned to the server, the piece of the information whose number of output times to the terminal becomes the threshold value or more is prohibited from being output to the terminal in the later output after the output to the terminal wherein the number of times the piece of the information has been output to the terminal becomes equal to the threshold value, so that the user can be prevented from again and again making the most use of each piece of the information whose number of output times is large with the terminal, and the pieces of the information of which the most use is made in the terminal can be prevented from becoming stereotyped.

Therefore, the pieces of the information of which the most use is made in the terminal can be prevented from becoming stereotyped and the convenience as the information processing system can be improved.

According to a sixth aspect of the invention, in addition to the advantage of the fifth aspect of the invention, each piece of the information is a piece of music and thus the pieces of music that the user can listen to with the terminal can be prevented from becoming stereotyped.

According to seventh or eighth aspects of the invention, based on the number-of-output-times information piece for each piece of information, the piece of the information whose number of output times to the terminal becomes the threshold value or more is prohibited from being output to the terminal in the later output after the output to the terminal wherein the number of times the piece of the information has been output to the terminal becomes equal to the threshold value, so that the user can be prevented from again and again making the most use of each piece of the information whose number of output times is large with the terminal, and the pieces of the information of which the most use is made in the terminal can be prevented from becoming stereotyped.

Therefore, the pieces of the information of which the most use is made in the terminal can be prevented from becoming stereotyped and the convenience as the information processing system can be improved.

According to a ninth aspect of the invention, the server computer is caused to function so that the number-of-output-times information pieces provided in a one-to-one correspondence with the plurality of pieces of information are output to the terminal together with the pieces of information and further, based on the number-of-output-times information returned from the terminal, the piece of the information whose number of output times to the terminal becomes the threshold value or more is prohibited from being output to the terminal in the later output after the output to the terminal wherein the number of times the piece of the information has been output to the terminal becomes equal to the threshold value. Thus, the user can be prevented from again and again making the most use of each piece of the information whose number of output times is large with the terminal, and the pieces of the information of which the most use is made in the terminal can be prevented from becoming stereotyped.

Therefore, the pieces of the information of which the most use is made in the terminal can be prevented from becoming stereotyped and the convenience as the information processing system can be improved.

According to a tenth aspect of the invention, the server computer is caused to function so that each of the number-of-output-times information pieces provided in a one-to-one correspondence with the plurality of pieces of information is incremented each time the corresponding piece of the information has been output to the terminal, and based on the post-incremented number-of-output-times information, the piece of the information whose number of output times to the terminal becomes the threshold value or more is prohibited from being output to the terminal in the later output after the output to the terminal wherein the number of times the piece of the information has been output to the terminal becomes equal to the threshold value. Thus, the user can be prevented from again and again making the most use of each piece of the information whose number of output times is large with the terminal, and the pieces of the information of which the most use is made in the terminal can be prevented from becoming stereotyped.

Therefore, the pieces of the information of which the most use is made in the terminal can be prevented from becoming stereotyped and the convenience as the information processing system can be improved.

According to an eleventh aspect of the invention, the terminal computer is caused to function so that the number-of-output-times information piece output together with the corresponding piece of the information is incremented and then returned to the server. Thus, based on the number-of-output-times information returned to the server, the piece of the information whose number of output times to the terminal becomes the threshold value or more is prohibited from being output to the terminal in the later output after the output to the terminal wherein the number of times the piece of the information has been output to the terminal becomes equal to the threshold value, so that the user can be prevented from again and again making the most use of each piece of the information whose number of output times is large with the terminal, and the pieces of the information of which the most use is made in the terminal can be prevented from becoming stereotyped.

Therefore, the pieces of the information of which the most use is made in the terminal can be prevented from becoming stereotyped and the convenience as the information processing system can be improved.

## Claims

1. A server comprising:
a storage section for storing a plurality of first information pieces;
a corresponding information storage section for storing a plurality of second information pieces in one-to-one correspondence with the plurality of the first information pieces, the second information pieces indicating number of output times the first information pieces has been outputted to a terminal;
an output section for outputting the first information pieces to be outputted to a terminal together with the second information pieces corresponding to the first information pieces to be outputted; and
a prohibition section,
wherein when the outputted second information piece is returned from the terminal, on a basis of the returned second information pieces, the prohibition section prohibits the first information pieces corresponding to the second information piece of which the number of output times becomes a preset threshold value or more from being outputted to the terminal in later output after the output to the terminal wherein the number of output times becomes equal to the threshold value.

2. A server comprising:
a storage section for storing a plurality of first information pieces;
a corresponding information storage section for storing a plurality of second information pieces in one-to-one correspondence with the plurality of the first information pieces, the second information pieces indicating number of output times the first information pieces has been outputted to a terminal;
an output section for outputting the first information pieces to be outputted to a terminal;
an increment section for incrementing the number of output times of the second information piece corresponding to the first information piece outputted to the terminal each time when the first information piece is outputted to the terminal; and
a prohibition section for prohibiting the first information pieces corresponding to the second information piece of which the number of output times becomes a preset threshold value or more from being outputted to the terminal in later output after the output to the terminal wherein the number of output times becomes equal to the threshold value.

3. The server according to claim 1, further comprising a initialization section for initializing the second information piece corresponding to the first information piece prohibited from being output to the terminal.

4. The server according to claim 2, further comprising a initialization section for initializing the second information piece corresponding to the first information piece prohibited from being output to the terminal.

5. The server according to claim 1, wherein the first information pieces are a plurality of pieces of music.

6. The server according to claim 2, wherein the first information pieces are a plurality of pieces of music.

7. A terminal comprising:
a storage section for storing a plurality of first information pieces;
an acquisition section for acquiring a plurality of second information pieces in one-to-one correspondence with the plurality of the first information pieces together with the first information pieces corresponding to the second information pieces, the second information pieces indicating number of output times the first information pieces has been outputted to a terminal;
an increment section for incrementing the second information pieces corresponding to the acquired first information pieces;
a utilization section for utilizing the acquired first information pieces; and
a return section for returning the incremented second information pieces to the server.

8. The terminal according to claim 7, wherein the plurality of first information pieces are a plurality of pieces of music.

9. An information processing system comprising:
a server; and
a terminal connected to the server via a network,
wherein
the server comprises:
a first storage section for storing a plurality of first information pieces;
a corresponding information storage section for storing a plurality of second information pieces in one-to-one correspondence with the plurality of the first information pieces, the second information pieces indicating number of output times the first information pieces has been outputted to a terminal;
an output section for outputting the first information pieces to be outputted to a terminal together with the second information pieces corresponding to the first information pieces to be outputted; and
a prohibition section,
the terminal comprises:
a second storage section for storing the plurality of first information pieces;
an acquisition section for acquiring the plurality of second information pieces together with the first information pieces corresponding to the second information pieces;
an increment section for incrementing the second information pieces corresponding to the acquired first information pieces;
a utilization section for utilizing the acquired first information pieces; and
a return section for returning the incremented second information pieces to the server, and
wherein when the outputted second information piece is returned from the terminal, on a basis of the returned second information pieces, the prohibition section of the server prohibits the first information pieces corresponding to the second information piece of which the number of output times becomes a preset threshold value or more from being outputted to the terminal in later output after the output to the terminal wherein the number of output times becomes equal to the threshold value.

10. An information processing system comprising:
a server; and
a terminal connected to the server via a network,
wherein the server comprises:
a first storage section for storing a plurality of first information pieces;
a corresponding information storage section for storing a plurality of second information pieces in one-to-one correspondence with the plurality of the first information pieces, the second information pieces indicating number of output times the first information pieces has been outputted to a terminal;
an output section for outputting the first information pieces to be outputted to a terminal;
an increment section for incrementing the number of output times of the second information piece corresponding to the first information piece outputted to the terminal each time when the first information piece is outputted to the terminal; and
a prohibition section for prohibiting the first information pieces corresponding to the second information piece of which the number of output times becomes a preset threshold value or more from being outputted to the terminal in later output after the output to the terminal wherein the number of output times becomes equal to the threshold value, and
the terminal comprises:
a second storage section for storing the plurality of first information pieces;
an acquisition section for acquiring the plurality of second information pieces together with the first information pieces corresponding to the second information pieces;
an increment section for incrementing the second information pieces corresponding to the acquired first information pieces;
a utilization section for utilizing the acquired first information pieces; and
a return section for returning the incremented second information pieces to the server.

11. An information record medium recording a sever program for causing a server computer contained in a server to function as:
a storage section for storing a plurality of first information pieces;
a corresponding information storage section for storing a plurality of second information pieces in one-to-one correspondence with the plurality of the first information pieces, the second information pieces indicating number of output times the first information pieces has been outputted to a terminal;
an output section for outputting the first information pieces to be outputted to a terminal together with the second information pieces corresponding to the first information pieces to be outputted; and
a prohibition section,
wherein when the outputted second information piece is returned from the terminal, on a basis of the returned second information pieces, the prohibition section prohibits the first information pieces corresponding to the second information piece of which the number of output times becomes a preset threshold value or more from being outputted to the terminal in later output after the output to the terminal wherein the number of output times becomes equal to the threshold value.

12. An information record medium recording a sever program for causing a server computer contained in a server to function as:
a storage section for storing a plurality of first information pieces;
a corresponding information storage section for storing a plurality of second information pieces in one-to-one correspondence with the plurality of the first information pieces, the second information pieces indicating number of output times the first information pieces has been outputted to a terminal;
an output section for outputting the first information pieces to be outputted to a terminal;
an increment section for incrementing the number of output times of the second information piece corresponding to the first information piece outputted to the terminal each time when the first information piece is outputted to the terminal; and
a prohibition section for prohibiting the first information pieces corresponding to the second information piece of which the number of output times becomes a preset threshold value or more from being outputted to the terminal in later output after the output to the terminal wherein the number of output times becomes equal to the threshold value.

13. An information record medium recording a terminal program for causing a terminal computer contained in a terminal to function as:
a storage section for storing a plurality of first information pieces;
an acquisition section for acquiring a plurality of second information pieces in one-to-one correspondence with the plurality of the first information pieces together with the first information pieces corresponding to the second information pieces, the second information pieces indicating number of output times the first information pieces has been outputted to a terminal;
an increment section for incrementing the second information pieces corresponding to the acquired first information pieces;
a utilization section for utilizing the acquired first information pieces; and
a return section for returning the incremented second information pieces to the server.
